# EUROPÄISCHE PATENTSCHRIFT

(11) **EP 1 282 931 B1**
(45) Veröffentlichungstag und Bekanntmachung des Hinweises auf die Patenterteilung: **09.02.2005**
(21) Anmeldenummer: 01943002.4
(22) Anmeldetag: 04.05.2001
(51) Int. Cl.: H02K 3/52, H02K 1/14, H02K 1/18

(54) **STATOR**
STATOR
STATOR

(30) Priorität: 06.05.2000 DE 10022071
(43) Veröffentlichungstag der Anmeldung: 12.02.2003
(73) Patentinhaber: ROBERT BOSCH GMBH, 70442 Stuttgart (DE)
(72) Erfinder: HEIDRICH, Markus, 77815 Buehl (DE)
(86) Internationale Anmeldenummer: PCT/DE2001/001666
(87) Internationale Veröffentlichungsnummer: WO 2001/086779

(56) Entgegenhaltungen:
- EP-A- 0 910 152
- DE-C- 700 420
- US-A- 1 414 773
- US-A- 1 776 518
- US-A- 4 152 179

## Beschreibung

### Stand der Technik

Die Erfindung geht von einem Stator,wie er in der EP-A-0 910 152 beschrieben ist, aus.

Aus der US-PS 5,089,730 ist schon ein Stator bekannt, auf dessen Statorpolzähne eine vorgefertigte Spule aufgeschoben ist. Die Spulen werden durch ein einzelnes Teil auf den Statorpolzähnen befestigt. Dies hat jedoch den Nachteil, dass ein magnetischer Fluss im Wickelkopf der erregenden Spule nicht definiert geführt werden kann und somit nicht zum Drehmoment des Rotors beiträgt bzw. kein Zahnfußspalt vorhanden ist.

Die EP-A-0 910 152 zeigt einen Stator mit mehreren Statorpolschuhen in T-Form mit radialen Zähnen. Der Polschuh und der Zahn sind also einteilig ausgeführt. Jeder T-förmige Polschuh ist mit einem elektrisch isolierenden Material überzogen, wodurch Spulenkörper gebildet werden. Die Spulenkörper sind sowohl an die Polschuhe als auch die Zähne angespritzt, da diese einteilig sind.

Die DE 700 420 A und US-A-1 414 773 zeigen Statoren mit Polzähnen und auf die Polschuhe geschobene Spulen, die mit einem Polschuh auf dem Polkern gesichert sind.

Die US-A-1 776 518 zeigt Spulen, die auf T-förmige Polschuhe aufgeschoben sind, wobei die Polschuhe an einem Stator befestigt sind. Sie zeigt nicht, dass die Spulenkörper an die Polschuhe angespritzt sind. Somit ist der Gegenstand des Anspruchs 1 gegenüber dieser Schrift auch neu.

### Vorteile der Erfindung

Der erfindungsgemäße Stator mit den kennzeichnenden Merkmalen des Anspruchs 1 hat derngegenüber den Vorteil, dass auf einfache Art und Weise ein Stator gefertigt werden kann, der kleinere Toleranzen ermöglicht und verbesserte Leistungskenndaten, wie z.B. höherer Füllfaktor der Erregerspulen, verkleinerter Bauraum des Motors, Verringerung der Rastmomente, höheres Drehmoment, aufweist.

Durch die in den abhängigen Ansprüchen aufgeführten Massnahmen sind vorteilhafte Weiterbildungen und Verbesserungen des im Anspruch 1 genannten Stators möglich.

Es ist vorteilhaft, dass ein Polschuh aus weichmagnetischem Vollmaterial ist, weil dadurch ein magnetischer Streufluss eines Wickelkopfs einer erregenden Spule definiert in allen Raumrichtungen geführt werden kann und zur magnetischen Erregung beiträgt.

Auf vorteilhafte Weise kann eine Spule elektrisch an eine äussere Spannungsversorgung oder elektrische Steuerung angeschlossen werden, wenn in den Spulenträger ein elektrisches Anschlusselement integriert ist.

### Zeichnung

Ausführungsbeispiele der Erfindung sind in der Zeichnung vereinfacht dargestellt und in der nachfolgenden Beschreibung näher erläutert.

Es zeigen
Figur 1 ein erstes Ausführungsbeispiel eines gemäß Stand der Technik ausgebildeten Stators,
Figur 2 ein Polschuh,
Figur 3 ein Langpolschuh,
Figur 4 ein Langpolschuh mit einem Spulenkörper gemäß der Erfindung

### Beschreibung der Ausführungsbeispiele

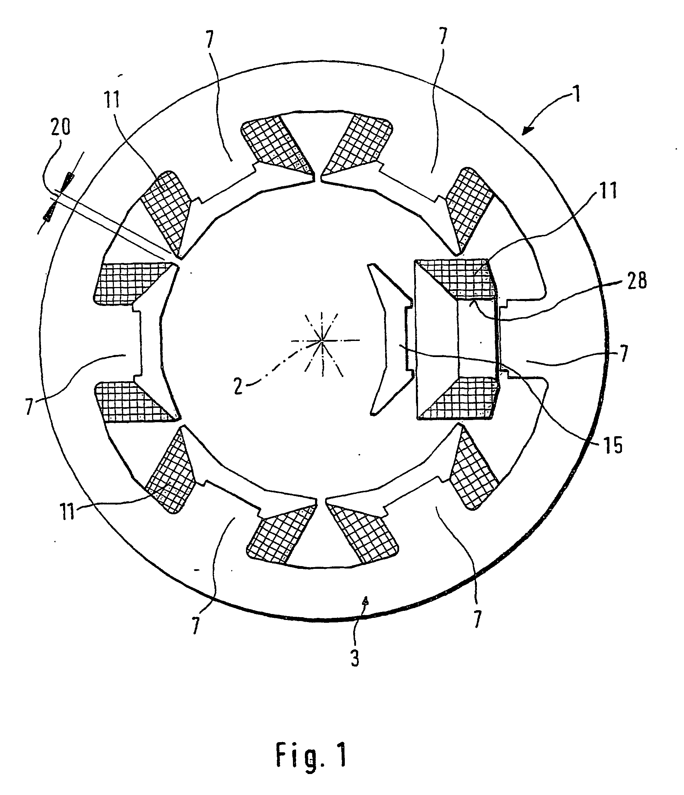

Figur 1 zeigt einen bekannten Stator 1 einer elektrischen Maschine, bspw. eines Innenläufermotors.
Der Stator 1 wird gebildet durch einen Statorring 3, der zumindest einen Statorpolzahn 7 und eine Mittelachse 2 hat. Der Statorring 3 ist aus einem Vollmaterial oder ist geblecht. Die bspw. sechs vorhandenen Statorpolzähne 7 sind sich radial nach innen erstreckend gleichmässig um die Mittelachse 2 verteilt.
Auf jeden Statorpolzahn 7 ist eine Spule 11 aufgeschoben. Dies sind bspw. vorgefertigte Spulen 11, bspw. sogenannte Backlack-Spulen, oder auf einen Spulenkörper 28 aufgewickelte Spulen 11. Bei den Spulen 11 kann es sich auch um Doppelspulen handeln.
Jede Spule 11 wird auf dem Statorpolzahn 7 durch je einen Polschuh 15 befestigt. Jedes freie Ende eines Statorpolzahns 7 und jeder Polschuh 15 sind bspw. so ausgebildet, dass es beim Zusammenfügen zu einer Presspassung kommt. Jede andere Befestigungsart ist denkbar.
Dadurch wird ein Stator 1 erreicht, dessen Innendurchmesser zwischen gegenüberliegenden Polschuhen 15 eine maximale Toleranz von 0,05 mm hat.
Bei der Montage werden die Polschuhe 15 auf die Statorpolzähne 7 aufgesetzt und mittels einem in Richtung der Mittelachse 2 eingeführten Dorn ausreichend auf den Statorpolzähnen 7 fixiert und bzgl. der Mittelachse 2 zentriert.

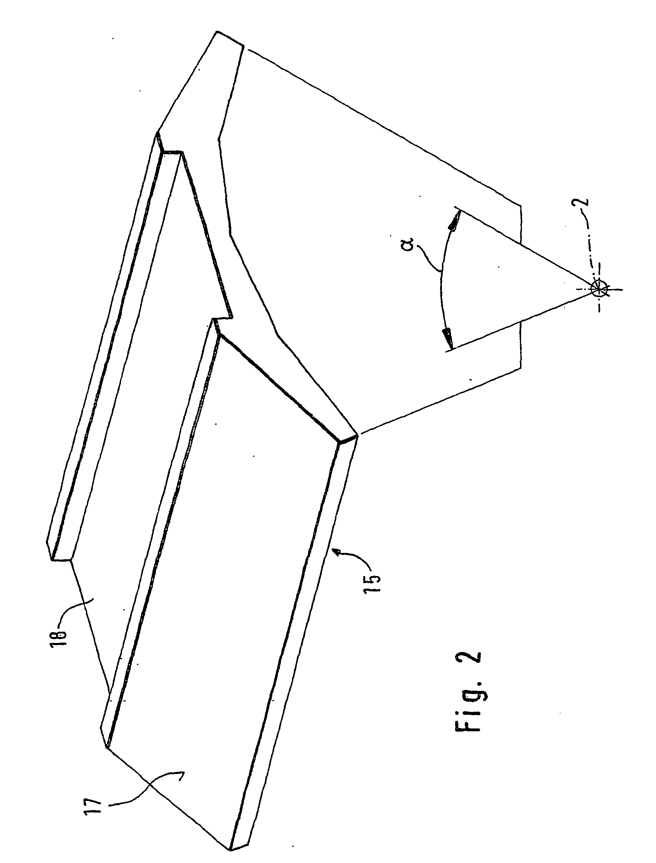

Figur 2 zeigt einen Polschuh 15.
Der Polschuh 15 hat an einer Aussenfläche 17 eine Nut 18, mittels der er auf das freie Ende des Statorpolzahns 7 gedrückt wird, so dass es zu einer Presspassung kommt.
Als Material für den Polschuh 15 kann weichmagnetisches, sogenanntes SMC oder SMS-Material verwendet werden, das presstechnisch leicht herstellbar und formbar ist. Dieses Vollmaterial erlaubt es auch, den magnetischen Fluss definiert zu leiten.
Ein Stator nach dem Stand der Technik besteht aus einem Blechpaket. Ein geblechter Polschuh ist jedoch nur mit erheblichen Aufwand aus Blechlaminat herstellbar.
Ein die Erstreckung des Polschuhs 15 in Umfangrichtung um die Mittelachse 2 erfassender Öffnungswinkel α kann deshalb gegenüber dem Stand der Technik vergrössert sein, wodurch ein Zahnfussspalt 20 (Fig. 1) kleiner gestaltet ist und damit ein Rastmoment für einen Übergang zwischen zwei Raststellungen verkleinert ist, weil durch einen kleineren Zahnfussspalt 20 ein magnetischer Widerstand verringert wird.

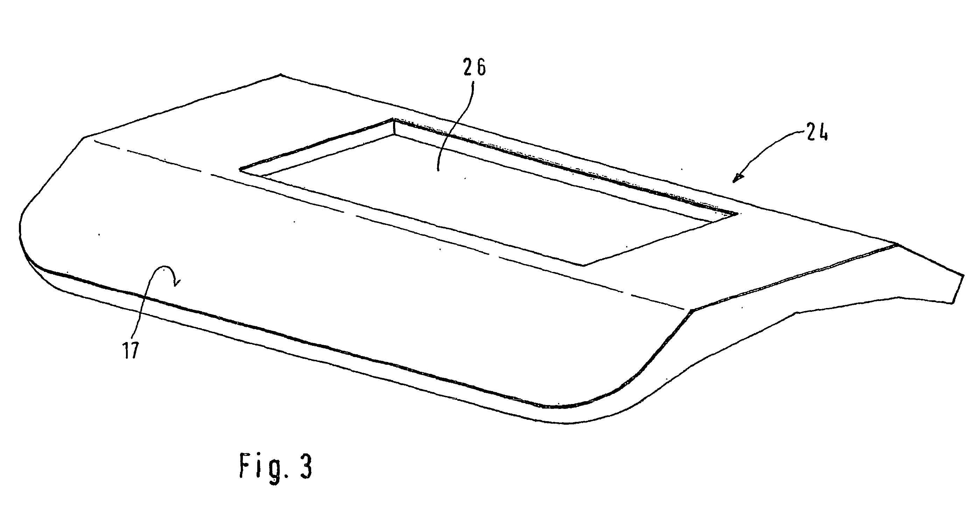

Figur 3 zeigt einen Langpolschuh 24.
Der Langpolschuh 24 ist ein in beiden axialen Richtungen gegenüber einem Ausführungsbeispiel gemäss Figur 2 verlängerter Polschuh 15, dessen Nut 18 an beiden Enden durch die Verlängerung geschlossen ist und eine Vertiefung 26 bildet.

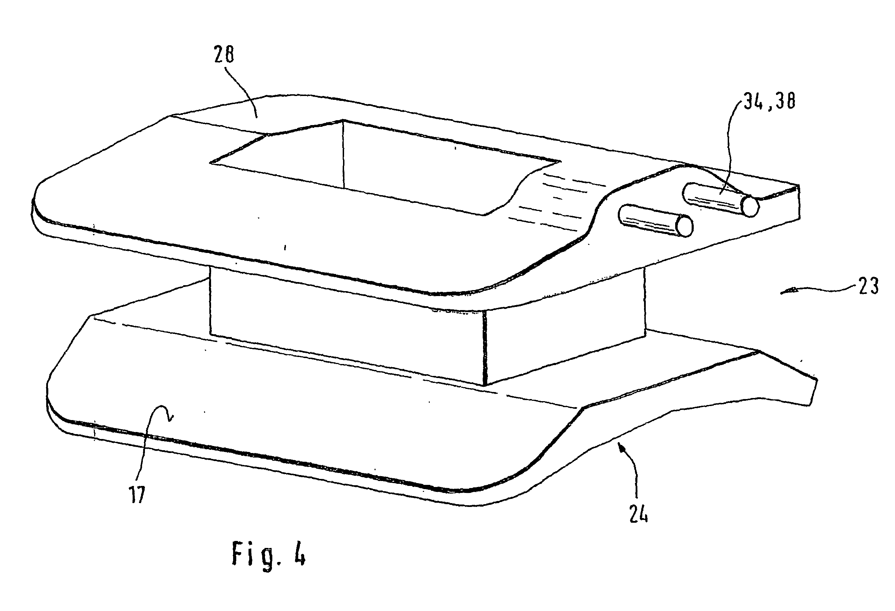

Figur 4 zeigt einen erfindungsgemäßen Langpolschuh 24 auf dem der Spulenkörper 28 angeordnet ist.
Der Spulenkörper 28 ist bspw. aus Kunststoff an den Langpolschuh 24 angespritzt. Es sind bspw.
Hinterschneidungen im Polschuh 15 bzw. Langpolschuh 24 vorgesehen, d.h. es wird eine Rastverbindung mit dem Polzahn 7 gebildet, so dass der Spulenkörper 28 an dem Polzahn 7 fixiert ist.
Auf den Spulenkörper 28 ist eine Spule 11 gewickelt, die vor der Montage auf den Statorring 3 geprüft werden kann, d.h. nur überprüfte Spulen 11 werden montiert. Ein als schlecht geprüfter Stator 1, der miteinander verdrahtete Spulen 11 umfasst, muss damit nicht wegen einer einzelnen schlechten Spule 1 komplett aussortiert werden.
An einem axialen Ende des Spulenkörpers 28 befindet sich ein Teil der Spule 11 (nicht gezeigt) in einem Wickelkopfraum 23. Der Langpolschuh 24 ermöglicht es, einen magnetischen Streufluss einer erregenden Spule 11 auch im Bereich des Wickelkopfraums 23 der Spule 11 definiert zu führen und trägt somit ebenfalls bei entsprechender Dimensionierung eines Rotors zum Drehmoment bei.

Der Spulenkörper 28 isoliert auch die Spule 11 elektrisch gegenüber dem Polzahn 7 und/oder gegenüber dem Polschuh 15 bzw. dem Langpolschuh 24. Der Spulenkörper 28 hat zumindest ein elektrisches Anschlusselement 34, welches zur Kontaktierung zumindest eines Endes einer Spule 11 mit einer äusseren Spannungsversorgung dient. In diesem Ausführungsbeispiel werden die elektrischen Anschlusselemente 34 durch zwei Pin's 38 gebildet, die in dem Spulenkörper 28 angeordnet sind. Es kann sich bei dem elektrischen Anschlusselement 34 bspw. auch um eine Schneidklemmverbindung handeln.

## Patentansprüche

1. Stator (1), insbesondere für einen elektrischen Innenläufermotor, mit zumindest einem Statorpolzahn (7), mit zumindest einer vorgefertigten Spule (11) mit einem Spulenkörper (28), der an einem Polschuh (15) angespritzt ist, wobei die Spule (11) auf den Statorpolzahn (7) aufgeschoben und durch den Polschuh (15) am Statorpolzahn (7) befestigt ist.

2. Stator nach Anspruch 1, wobei der Polschuh (15) aus einem weichmagnetischen Vollmaterial ist.

3. Stator nach Anspruch 1 oder 2, wobei der Spulenkörper (28) zumindest ein elektrisches Anschlusselement (34) hat.

4. Stator nach einem Ansprüche 1 bis 3, wobei das elektrische Anschlusselement (34) ein Pin (38) ist.

5. Stator nach einem der Ansprüche 1 bis 4, wobei der Polschuh (15) durch Presspassung an dem Statorpolzahn (7) befestigt ist.

## Claims

1. Stator (1), in particular for an electrical internal-rotor motor, having at least one stator pole tooth (7), having at least one prefabricated coil (11) with a coil former (28), which is integrally extruded on a pole shoe (15), the coil (11) being pushed onto the stator pole tooth (7) and fixed to the stator pole tooth (7) by means of the pole shoe (15).

2. Stator according to Claim 1, the pole shoe (15) being made of a soft-magnetic solid material.

3. Stator according to Claim 1 or 2, the coil former (28) having at least one electrical connection element (34).

4. Stator according to one of Claims 1 to 3, the electrical connection element (34) being a pin (38).

5. Stator according to one of Claims 1 to 4, the pole shoe (15) being fixed to the stator pole tooth (7) by means of a press fit.

## Revendications

1. Stator (1), notamment pour un moteur électrique à rotor interne, doté d'au moins une dent polaire de stator (7) et d'au moins une bobine préfabriquée (11) avec un corps de bobine (28) injecté sur une semelle polaire (15), la bobine (11) étant poussée sur la dent polaire de stator (7) et étant fixée par la semelle polaire (15) sur la dent polaire de stator (7).

2. Stator selon la revendication 1,
**caractérisé en ce que**
la semelle polaire (15) est en matériau plein magnétique doux.

3. Stator selon la revendication 1 ou 2,
**caractérisé en ce que**
le corps de bobine (28) a au moins un élément de raccordement électrique (34).

4. Stator selon l'une quelconque des revendications 1 à 3,
**caractérisé en ce que**
l'élément de raccordement électrique (34) est une broche (38).

5. Stator selon l'une quelconque des revendications 1 à 4,
**caractérisé en ce que**
la semelle polaire (15) est fixée par ajustage serré sur la dent polaire de stator (7).
